# EUROPÄISCHE PATENTSCHRIFT

(11) **EP 1 870 334 B1**
(45) Veröffentlichungstag und Bekanntmachung des Hinweises auf die Patenterteilung: **26.08.2015**
(21) Anmeldenummer: 07011007.7
(22) Anmeldetag: 05.06.2007
(51) Int. Cl.: B64D 11/06, B60N 2/02

(54) **Fahrzeugsitz, Einstellsystem und Verfahren zum Bewegen zumindest eines in einer Fahrzeugkabine angeordneten Fahrzeugsitzes, insbesondere Fluggastsitzes**
Vehicle seat, adjusting system and method for moving at least one vehicle seat in a vehicle cabin, in particular an airplane passenger seat
Siège de véhicule, système de réglage et procédé destiné au déplacement d'au moins un siège de véhicule monté dans une cabine de véhicule, en particulier siège de passager d'avion

(30) Priorität: 20.06.2006 DE 102006029206
(43) Veröffentlichungstag der Anmeldung: 26.12.2007
(73) Patentinhaber: Bühler Motor GmbH, 90459 Nürnberg (DE)
(72) Erfinder: Schieweck, Arno, 90571 Schwaig (DE); Trölenberg, Wolfgang, Dr., 41352 Korschenbroich (DE); Abt, Hans-Dieter, 80469 München (DE)

(56) Entgegenhaltungen:
- EP-A- 0 850 834
- DE-A1-102004 037 914
- JP-A- 2003 175 752
- US-A1- 2002 158 497
- US-A1- 2004 066 067
- US-A1- 2006 004 505

## Beschreibung

Die Erfindung betrifft einen Fahrzeugsitz, ein Einstellsystem und ein Verfahren zum Bewegen zumindest eines in einer Fahrzeugkabine angeordneten Fahrzeugsitzes, insbesondere Fluggastsitzes, mit aneinander gekoppelten oder geführten Sitzkomponenten, wie einem Sitzteil, einer Rückenlehne, und einer Beinauflage, die über mindestens eine Antriebseinrichtung in ihrer Lage und/oder Neigung einstellbar sind, mit einer elektronischen Einrichtung zur kollisionsfreien Bewegung und zur Einstellung des Sitzes in Bezug auf ein Koordinatensystem.

Aus der DE 101 07 195 A1 ist ein Fahrzeugsitz und ein Verfahren zur anschlagsfreien elektrischen Bewegung von Fahrzeugsitzen bekannt, bei dem unter Zugrundelegung eines zweidimensionalen mathematischen Modells und Hüllkurven bzw. gradlinigen Grenzlinien über ein Bewegungsmodell Grenzwerte für die Bewegung der einzelnen Sitzkomponenten (Sitzteil, Rücklehne, Bein- und Sitzauflage) erstellt werden. Ein Überwachungssystem steuert die Aktuatorik so an, dass diese Grenzwerte nicht verletzt werden. Jeder Aktuator ist dazu mit entsprechender Weg- und Winkelsensorik ausgestattet. Dieser Stand der Technik berücksichtigt nicht, dass zukünftige zum Teil auch schon entwickelte Sitzkonzepte deutlich mehr Flexibilität erfordern. Zukünftige First- und Businessclass-Sitze werden mit der Komfortanforderung "Liegeposition" (fullflat) deutlich mehr Platz benötigen. Um dies ökonomisch darzustellen ist es nahe liegend, dass neben Linearbewegungen in ZX-Richtung auch Positionsveränderungen in y Richtung (benachbarte Sitze auseinander ziehen) bzw. Drehbewegungen der Sitze notwendig sind. Weiterhin erkennbar ist auch die Anforderung, solche Sitze/ Sitzreihen in Besprechungsposition zu bringen (wieder: Drehbewegung). Dies ist durch bisher bekannte Verfahren kaum möglich.

Das Dokument US 2004/0066067 wird als nächsliegender Stand der Technik betrachtet.

Aufgabe der Erfindung ist es daher einen Fahrzeugsitz und ein Verfahren zum Bewegen zumindest eines in einer Fahrzeugkabine angeordneten Fahrzeugsitzes vorzustellen, das diese Unzulänglichkeiten beseitigt und dadurch eine ökonomische, platzsparende Anordnung und deren Verstellung in andere vorgegebene oder individuell ansteuerbare Stellungen oder Anordnungen unter Vermeidung möglicher Kollisionen möglich werden.

Diese Aufgabe wird erfindungsgemäß dadurch gelöst, dass das Koordinatensystem ein kabinenorientiertes dreidimensionales Koordinatensystem ist und dass die elektronische Einrichtung die Antriebseinrichtung derart ansteuert, dass der zumindest eine Sitz in Bezug auf dieses Koordinatensystem kollisionsfrei in drei Dimensionen bewegbar und einstellbar ist. Die dreidimensionale Bewertung des zulässigen Verfahrraums erlaubt eine ökonomische, platzsparende Anordnung von Sitzsystemen und Absicherung/Vermeidung von möglichen Kollisionen. Aufgrund des Kabinenbezugs des Koordinatensystems können die Kabinenbegrenzungen mit erfasst werden.

Weiterbildungen der Erfindung werden in den Unteransprüche dargestellt. Durch Kontrolle der Bewegung des Sitzes und dessen Komponenten innerhalb einer räumlichen Begrenzung, wobei die räumliche Begrenzung durch eine dreidimensionale ebene oder gekrümmte Hüllfläche gekennzeichnet ist, kann für jede Bewegung des Sitzes in alle Raumrichtungen sichergestellt werden, dass eine Kollision vermieden wird.

Es hat sich als sinnvoll herausgestellt ein Kugelkoordinatensystem für die Bestimmung der Position der Sitzkomponenten oder des Sitzes in Bezug auf die Kabine oder in Bezug auf andere Hindernisse zu verwenden.

Das Kugelkoordinatensystem eignet sich besonders für Sitze, die um eine zum Kabinenboden rechtwinklige Achse dreh- oder schwenkbar sind.

Für bestimmte Bewegungen oder Bewegungsabläufe kann die zusätzliche Verwendung eines rechtwinkligen Koordinatensystems zweckmäßig sein, deshalb ist es vorgesehen, dass ergänzend zum Kugelkoordinatensystem ein rechtwinkliges Koordinatensystem einsetzbar sein soll.

Damit auch individuell eingestellte Nachbarsitze oder Kabinenbegrenzungen bei der Kollisionsvermeidung berücksichtigt werden können, lässt sich auch die räumliche Begrenzung, also die Hüllfläche innerhalb derer sich der Sitz frei bewegen kann in ihrer Lage und Form ändern.

Um die Umgebungsänderungen berücksichtigen zu können ist vorgesehen, dass ein Informationsaustausch zwischen den Sitzen bzw. deren Steuerungssystemen zum Abgleich der veränderten Hüllfläche stattfindet. Dieser Informationsaustausch kann über ein Bussystem erfolgen, an dem alle Sitze einer Sitzgruppe angeschlossen sind.

Um eine möglichst ökonomische platzsparende Anordnung der Sitze zu erreichen, ist es vorgesehen, dass die Bewegung der Sitze automatisiert verkoppelt sind.

Das beschriebene Sitzsteuerungssystem soll aus einer ControlUnit, Aktuatoren und geeigneten Weg- und Winkelsensoren bestehen. Geeignet sind z.B. Dreh- oder Linearpotentiometer.

Eine besonders gute Ansteuerbarkeit und eine hohe Genauigkeit der Positionierung ist mit elektrisch ansteuerbaren und betreibbaren Betätigungseinrichtungen gegeben.

Eine besonders bevorzugte Weiterbildung der Erfindung besteht darin, dass die elektronische Einrichtung ein Einstellsystem für Fahrzeugsitze oder Gruppen von Fahrzeugsitzen, insbesondere Flugzeugsitze, bestehend aus ein oder mehreren Steuereinheiten und aus ein oder mehreren Verstelleinheiten ist, wobei die Bewegungsabläufe und Bewegungen der jeweils einzelnen Sitzkomponenten und dieser Sitzkomponenten zueinander und die Bewegungen dieser Komponenten oder Sitze innerhalb einer Umgebung oder Sitzgruppe durch ein dreidimensionales Bewegungsmodell in einem dreidimensionalen Koordinatensystem vollständig beschrieben werden. Hierdurch wird eine Trennung zwischen der Beschreibung und Umsetzung der Bewegungen der Sitzkomponenten von den grundlegenden Programmabläufen der Steuerung möglich.

Eine komfortable Möglichkeit für den Entwickler zur Konfiguration des Bewegungsmodells ist es, wenn dieses an einem Personal Computer (PC) oder einer CAD-Station eingegeben und angepasst werden kann.

Es ist vorgesehen, dass Grenzparameter für das Bewegungsmodel automatisch auf Basis definierter Umgebungsbeschreibungen generiert werden. Dadurch lässt sich die Anpassung an Geometrieänderungen eines Sitzes oder der Zuordnung von Sitzen zueinander einfacher durchführen und der Änderungsaufwand minimieren.

Eine besonders bevorzugte Weiterbildung der Erfindung ist die Möglichkeit das Bewegungsmodell am PC zu simulieren. Die Erfindung beschreibt ein System, das die Beschreibung und Umsetzung der Bewegungen der Sitzkomponenten von den grundlegenden Programmabläufen der Steuerung trennt und dem Sitzhersteller erlaubt, die geometrischen Daten und Bewegungen der Komponenten und des Sitzes über einfach zu bedienende Hilfsmittel einzugeben, zu modifizieren, zu simulieren, zu testen und für den Betrieb in die Steuerung zu übertragen. Hierdurch entfallen die hohen Aufwendungen für Versuchsdurchführungen am Modell oder am Einsatzort.

Die Möglichkeit, die Ergebnisse einer Modellentwicklung oder der Anpassung bei der Simulation vom PC in eine Steuerung zu übertragen, erlaubt es das gefundene Modell schneller im Einsatz zu testen.

Es ist vorstellbar, dass das Bewegungsmodel in einer PC oder CAD-Stations-Software erstellt werden kann, oder dass es in einem Software-Modul erstellt wird, das in eine PC-oder CAD-Stationsumgebung nachladbar ist (=Plug In).

Eine sehr vorteilhafte Weiterbildung der Erfindung ist dadurch gekennzeichnet, dass die Steuerung eine Basissoftware (=Betriebssystem) umfasst, die je nach Kundenanwendung differieren kann und dass die Steuerung die primären Steuerungsfunktionen inklusive einem Verarbeitungsteil bereitstellt, wobei das Verarbeitungsteil eine Soft- und Hardware umfasst, die mit dem Bewegungsmodell arbeitet und eine flexible Einbettung des jeweiligen Bewegungsmodells erlaubt.

Wirtschaftlich ist es von großem Nutzen die Steuerung modular aufzubauen, so dass die Steuerung flexibel an unterschiedliche Konfigurationen angepasst werden kann.

Das Einstellsystem soll die Handhabung des Bewegungsmodells von zumindest einem Sitz erlauben. In weiterer Ausgestaltung dieses Erfindungsgedankens ist vorgesehen, dass es die Handhabung des Bewegungsmodells von mindestens einem Sitz in Abhängigkeit der Umgebungsbeschreibung erlaubt. Mit "Handhabung" ist der Betrieb von Komponenten des Sitzes, oder des Sitzes in seiner Umgebung gemeint.

Da die Umgebung in den meisten Anwendungsfällen nicht starr ist, sondern selbst aus beweglichen Elementen besteht, wie Nachbarsitzen oder Kabinenabtrennungen, ist es wichtig, dass das Einstellsystem auch für die Variierung von Umgebungsbeschreibungen während des Betriebs ausgelegt ist.

Um Kollisionen zu vermeiden ist eine Kontrolle auf Verletzung von Grenzparametern und Umgebungsbeschreibungen notwendig. Hierbei können Sensoren eingesetzt werden, die bei Annäherung an ein Hindernis oder an vordefinierte Grenzen entsprechende Rückmeldungen generieren. Soweit es sich um definierte Grenzen handelt, sind Potentiometer als geeignete Bewegungssensoren bekannt. Hindernisse können im einfachsten Fall durch eine di/dt-Auswertung nach einer Berührung oder per Ultraschall-Sensor schon vor einer möglichen Kollision erkannt werden.

Im Falle von Verletzungen von Grenzparametern und Umgebungsbeschreibungen soll es dem System erlaubt sein, definierbare Aktionen durchzuführen. Solche Aktionen können sein: Anhalten, Zurückfahren, Ausweichen, Geschwindigkeitsanpassungen oder auch eine Warnsignalausgabe.

Eine weitere Lösung der Aufgabe besteht in einem Fahrzeugsitz, der in Bezug auf ein Koordinatensystem einstellbar ist, wobei das Koordinatensystem ein kabinenorientiertes dreidimensionales Koordinatensystem ist und die elektronische Einrichtung die Antriebseinrichtung derart ansteuert, dass der zumindest eine Sitz in Bezug auf dieses Koordinatensystem kollisionsfrei in drei Dimensionen bewegbar und einstellbar ist. Die dreidimensionale Bewertung des zulässigen Verfahrraums erlaubt eine ökonomische, platzsparende Anordnung von Sitzsystemen und Vermeidung von möglichen Kollisionen. Aufgrund des Kabinenbezugs des Koordinatensystems können die Kabinenbegrenzungen mit erfasst werden.

Durch Kontrolle der Bewegung des Sitzes und dessen Komponenten innerhalb einer räumlichen Begrenzung, wobei die räumliche Begrenzung durch eine dreidimensionale ebene oder gekrümmte Hüllfläche gekennzeichnet ist, kann für jede Bewegung des Sitzes in alle Raumrichtungen sichergestellt werden, dass eine Kollision vermieden wird.

Es hat sich als sinnvoll herausgestellt ein Kugelkoordinatensystem für die Bestimmung der Position der Sitzkomponenten oder des Sitzes in Bezug auf die Kabine oder in Bezug auf andere Hindernisse zu verwenden. Das Kugelkoordinatensystem eignet sich besonders für Sitze, die um eine zum Kabinenboden rechtwinklige Achse dreh- oder schwenkbar sind. Für bestimmte Bewegungen oder Bewegungsabläufe kann die zusätzliche Verwendung eines rechtwinkligen Koordinatensystems zweckmäßig sein, deshalb ist es vorgesehen, dass ergänzend zum Kugelkoordinatensystem ein rechtwinkliges Koordinatensystem einsetzbar ist.

Damit auch individuell eingestellte Nachbarsitze oder Kabinenbegrenzungen bei der Kollisionsvermeidung berücksichtigt werden können, lässt sich auch die räumliche Begrenzung, also die Hüllfläche innerhalb derer sich der Sitz frei bewegen kann in ihrer Lage und Form ändern.

Um die Umgebungsänderungen berücksichtigen zu können ist vorgesehen, dass ein Informationsaustausch zwischen den Sitzen bzw. deren Steuerungssystemen zum Abgleich der veränderten Hüllfläche stattfindet. Dieser Informationsaustausch kann über ein Bussystem erfolgen, an dem alle Sitze einer Sitzgruppe angeschlossen sind. Bei einander benachbarten Sitzen kann derselbe Controler die Sensorsignale auswerten und die Steuerung vornehmen. Bei der Kommunikation mit dem Vorder- oder dem Rücksitz können z.B. das Bordethernet, CAN-Bus, Bluetooth oder sonstige Kommunikationsprotokolle verwendet werden.

Um eine möglichst ökonomische platzsparende Anordnung der Sitze zu erreichen, ist es vorgesehen, dass die Bewegung der Sitze automatisiert verkoppelt sind.

Das beschriebene Sitzsteuerungssystem soll aus einer ControlUnit, Aktuatoren und geeigneten Weg- und Winkelsensoren bestehen. Geeignet sind z.B. Dreh- oder Linearpotentiometer.

Eine besonders gute Ansteuerbarkeit und eine hohe Genauigkeit der Positionierung ist mit elektrisch ansteuerbaren und betreibbaren Betätigungseinrichtungen gegeben.

Ausführungsbeispiele der Erfindung werden nachstehend anhand der Zeichnung näher erläutert. Es zeigen:
Fig.1a zwei Sitzreihen in aufrechter Position,
Fig. 1b eine Sitzreihe in Liegeposition,
Fig. 1c eine Sitzreihe in verdrehter Stellung,
Fig. 2 eine Skizze eines Fahrzeugsitzes,
Fig. 3a zwei eng benachbarte Fahrzeugsitze,
Fig.3b zwei seitlich verstellte Fahrzeugsitze,
Fig. 3c zwei um ca. 45° gleichsinnig verdrehte Fahrzeugsitze,
Fig. 4a zeigt eine Sitzgruppe aus zwei Sitzreihen in einer Kabine,
Fig. 4b zeigt eine als Besprechungszimmer konfigurierte Kabine,
Fig. 5 zeigt einen Fahrzeugsitz in einem Kugelkoordinatensystem und
Fig. 6 einen Fahrzeugsitz mit angedeuteten begrenzenden Hüllflächen.

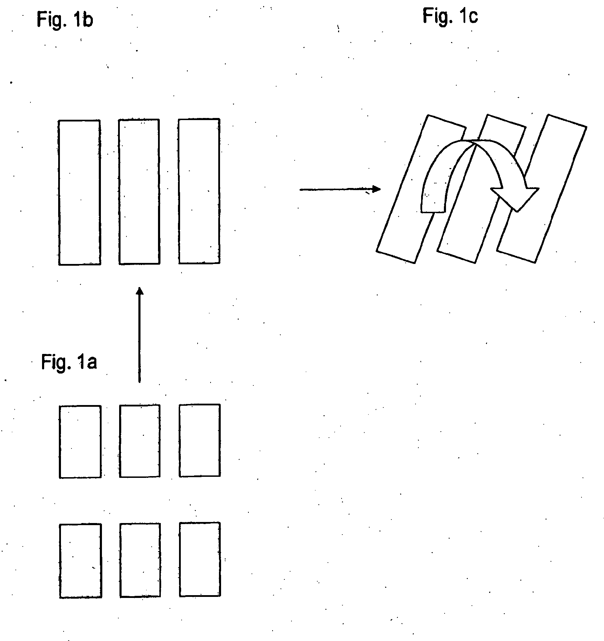

Fig. 1 a zeigt zwei Sitzreihen mit jeweils drei in einer Reihe nebeneinander angeordneten Sitzen. Dabei sind die Sitze in der sog. TTL - Position dargestellt (TTL = Taxi, Take-Off and Landing), in der die Passagiere aufrecht sitzen.

Fig. 1b, zeigt eine der Sitzreihen in der sogenannten Full-Flat-Position, bei der eine Beinauflage hochgestellt ist und eine Rückenlehne abgesenkt ist.

Fig. 1c zeigt eine Sitzreihe in verdrehter Stellung. Dabei wird eine platzsparende Stellung eingenommen, da sich der seitliche Abstand der Sitze untereinander verringert.

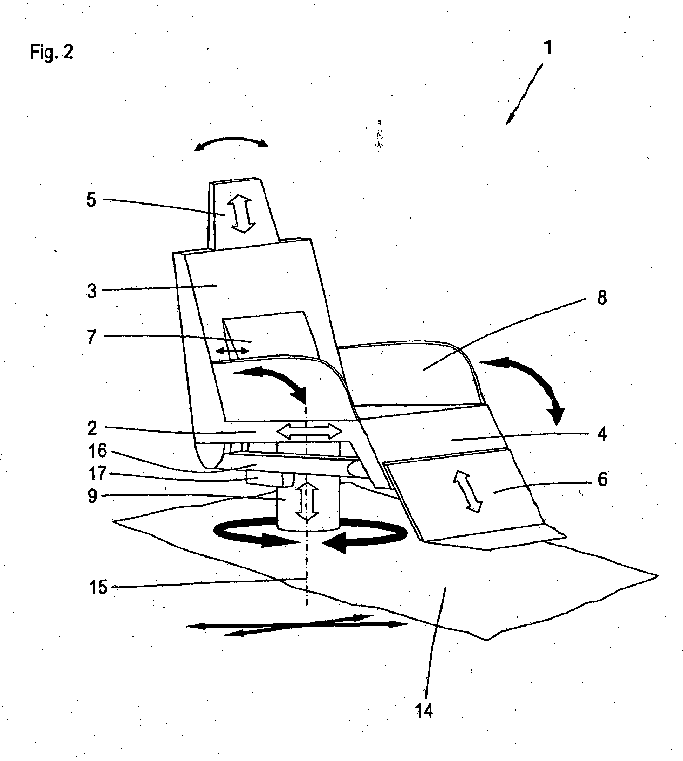

Fig. 2 zeigt eine Skizze eines Fahrzeugsitzes 1 mit einem Sitzteil 2, an dem eine Rückenlehne 3 und eine Beinauflage 4 schwenkbar angelenkt sind. An der Rückenlehne 3 ist eine Kopfstütze 5 höhenverstellbar geführt und in ihrer Neigung einstellbar angelenkt. Am Sitzteil 2 ist eine Fußstütze 6 längsbeweglich geführt. Das Sitzteil 2 ist längsbeweglich und verdrehbar oder zumindest verschwenkbar an einem Sitzrahmen 9 geführt und gelagert. Der Sitzrahmen 9 ist höhenverstellbar und in zumindest einer weiteren Richtung neigbar oder linear verstellbar (vor und zurück bzw. nach rechts und nach links). Der Fahrzeugsitz 1 ist um eine Drehachse 15 dreh- oder zumindest schwenkbar, wobei die Drehachse 15 rechtwinklig zu einem Kabinenboden 14 verläuft. Die Rückenlehne ist mit einer Lordosenstütze 7 ausgerüstet, die elektromechanisch oder pneumatisch betätigt sein kann. Bei einer pneumatischen Betätigung der Lordosenstütze 7 ist eine Luftpumpe im Fahrzeugsitz oder im Fahrzeug angeordnet und mit einem Luftpolster der Lordosenstütze 7 verbunden. Weiter umfasst der Fahrzeugsitz 1 Armlehnen 8, die optional elektromotorisch antreibbar sein können.

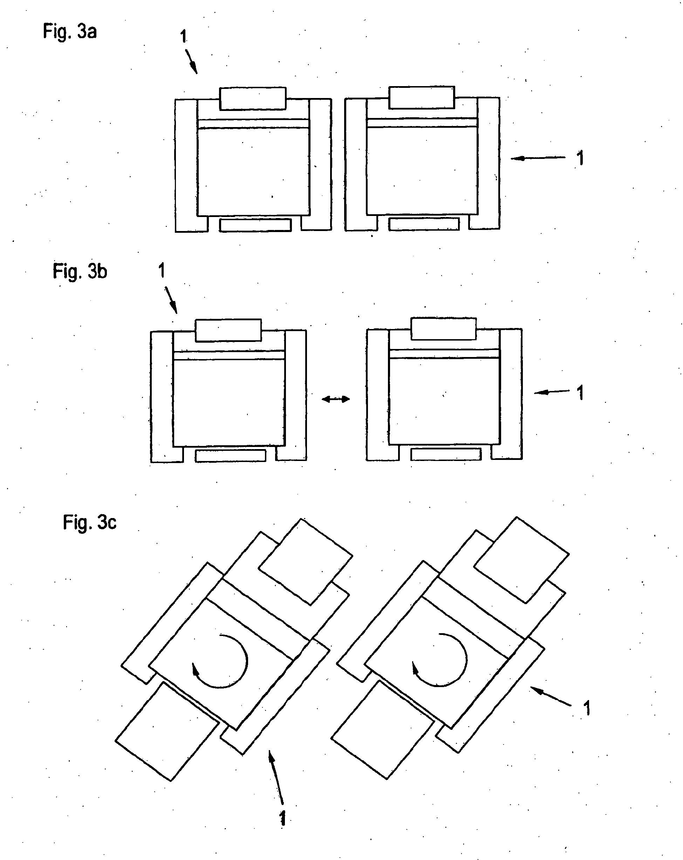

Fig. 3a zeigt zwei eng benachbarte Fahrzeugsitze 1, die bei Fig. 3b seitlich verstellt sind und bei Fig. 3c um ca. 45° gleichsinnig gedreht sind. Um die Sitze drehen zu können muss vorher ihr Abstand zueinander vergrößert werden.

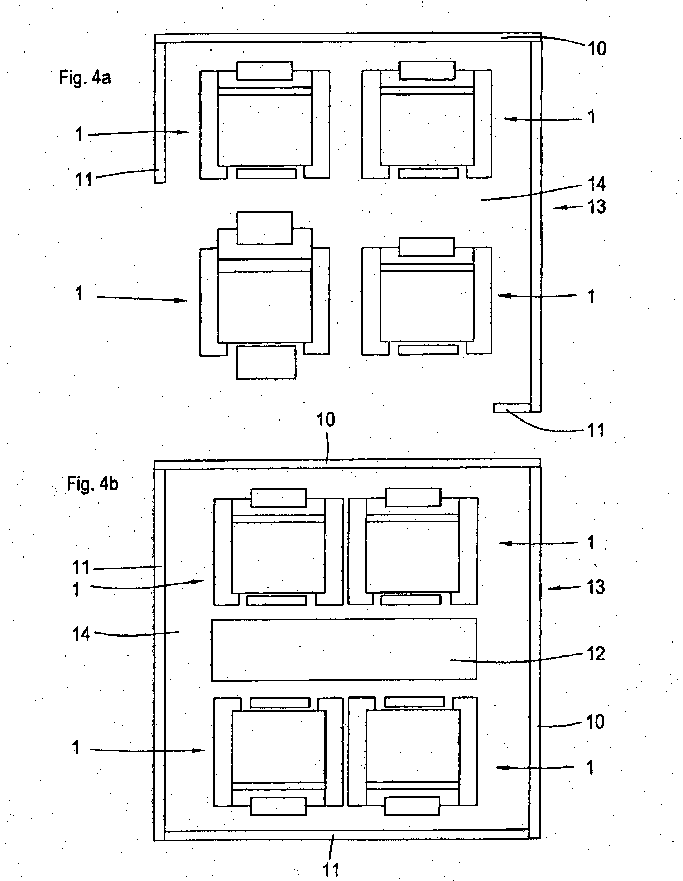

Fig. 4a zeigt eine Sitzgruppe aus zwei Sitzreihen mit je zwei Fahrzeugsitzen 1, die in gleicher Richtung ausgerichtet ist, innerhalb einer teilweise geöffneten Kabine 13, die aus festen Begrenzungswänden 10 und aus flexiblen Begrenzungswänden 11 besteht. Ein Sitz ist in eine bequemere Sitzposition eingestellt als die übrigen. Um diese Sitzanordnung in einen Besprechungsraum umzukonfigurieren sind bei Fig. 4b zwei Fahrzeugsitze 1 um 180° gedreht, damit sich die Passagiere gegenübersitzen können. Die Abstände der Fahrzeugsitze 1 untereinander sind teilweise verringert und teilweise vergrößert. Zwischen den beiden Sitzreihen ist ein Besprechungstisch 12 ausgefahren und flexible Begrenzungswände 11 wurden verstellt um einen geschlossenen Raum zu erhalten.

Das Verfahren zum Verstellen von Fahrzeugsitzen mit Hilfe eines dreidimensionalen Koordinatensystems erlaubt es die Fahrzeugsitze 1 kollisionsfrei automatisch oder halbautomatisch in eine andere Sitzkonfiguration (z.B. von Fig. 4a nach 4b) zu verstellen, wobei sowohl Begrenzungen, bestehend aus Vorder- oder Rücksitz als auch Kabinenbegrenzungen berücksichtigt werden.

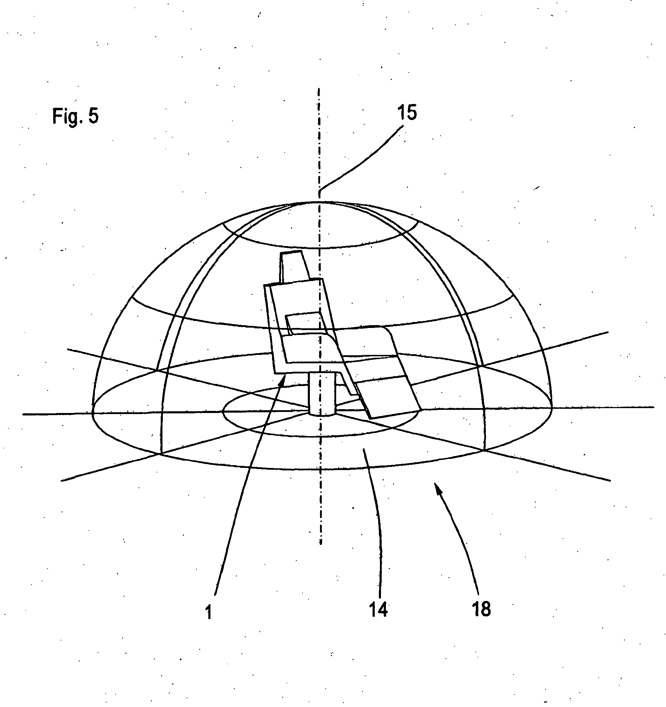

Fig. 5 zeigt einen Fahrzeugsitz 1 der um eine Drehachse 15 dreh- oder schwenkbar ist, wobei die Drehachse 15 rechtwinklig zu einem Kabinenboden 14 verläuft und der Fahrzeugsitz 1 in drei Raumrichtungen in einem Kugelkoordinatensystem einstellbar und verfahrbar ist.

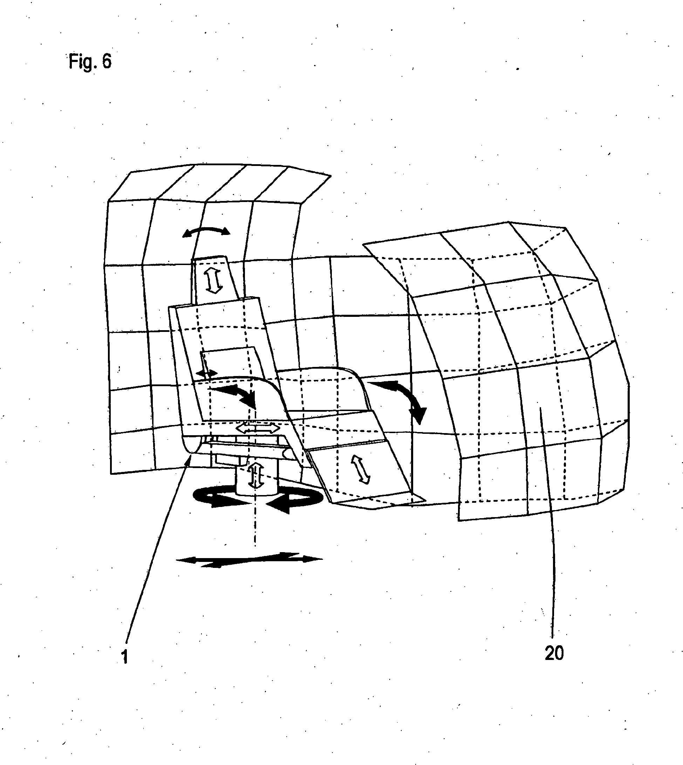

Fig. 6 zeigt einen Fahrzeugsitz 1 mit angedeuteten begrenzenden Hüllflächen 20. Die Hüllflächen werden bei dem Erfindungsgemäßen Verfahren als virtuelle Grenzen in die Berechnung der maximalen Verfahrwege einbezogen, so dass eine Kollision mit bekannten Hindernissen ausgeschlossen werden kann. Andere Hindernisse, die keine Stellungsrückmeldung beinhalten müssen über Sensoren, vorzugsweise über berührungslose Sensoren, z.B. Ultraschallsensoren, detektiert werden.

### Bezugszeichenliste

- 1: Fahrzeugsitz
- 2: Sitzteil
- 3: Rückenlehne
- 4: Beinauflage
- 5: Kopfstütze
- 6: Fußstütze
- 7: Lordosenstütze
- 8: Armlehne
- 9: Sitzrahmen
- 10: Feste Kabinenbegrenzung
- 11: Flexible Kabinenbegrenzung
- 12: Tisch
- 13: Fahrzeugkabine
- 14: Kabinenboden
- 15: Drehachse
- 16: Antriebseinrichtung
- 17: Elektronische Einrichtung
- 18: Koordinatensystem
- 19: Hüllfläche

## Patentansprüche

1. Verfahren zum Bewegen zumindest eines in einer Fahrzeugkabine (13) angeordneten Fahrzeugsitzes (1) mit aneinander gekoppelten oder geführten Sitzkomponenten, die über mindestens eine Antriebseinrichtung (16) in ihrer Lage und/oder Neigung einstellbar sind, mit einer elektronischen Einrichtung (17) zur kollisionsfreien Bewegung und zur Einstellung des Fahrzeugsitzes (1) in Bezug auf ein Koordinatensystem (18) wobei für die Sitz zu Sitz-Bewertung bzw. Sitz zu Kabinen-Bewertung ergänzend auch ein rechtwinkliges Koordinatensystem eingesetzt wird, die räumliche Begrenzung sich in ihrer Lage und Form ändern kann und ein Informationsaustausch zwischen den Sitzen bzw. deren Steuerungssystemen zum Abgleich der veränderten Hüllfläche stattfindet, **dadurch gekennzeichnet, dass** das Koordinatensystem (18) ein kabinenorientiertes dreidimensionales Koordinatensystem (18) ist, däss die elektronische Einrichtung (17) die Antriebseinrichtung (16) derart ansteuert, dass der zumindest eine Fahrzeugsitz (1) in Bezug auf dieses Koordinatensystem (18). kollisionsfrei in drei Dimensionen bewegbar und einstellbar ist, dass die elektronische Einrichtung (17) die Bewegung des Fahrzeugsitzes (1) und dessen Komponenten (2, 3 4) innerhalb einer räumlichen Begrenzung kontrolliert, die durch eine dreidimensionale gekrümmte Hüllfläche gekennzeichnet ist, dass das räumliche Koordinatensystem ein Kugelkoordinatensystem ist, und dass der Fahrzeugsitz (1) um eine in Bezug auf einen Kabinenboden (14) rechtwinklige Drehachse (15) ansteuerbar ist.

2. Verfahren nach Anspruch 1, **dadurch gekennzeichnet, dass** die Bewegung der Sitze automatisiert verkoppelt sind, um eine möglichst ökonomische, platzsparende Anordnung der Sitze zu erreichen.

3. Verfahren nach Anspruch 1 oder 2, **dadurch gekennzeichnet, dass** ein Sitzsteuerungssystem aus einer ControlUnit, Aktuatoren und geeigneter Weg- und Wnkelsensorik besteht.

4. Verfahren nach zumindest einem der vorangehenden Ansprüche, **dadurch gekennzeichnet, dass** eine Betätigungseinrichtung elektrisch ansteuerbar und betreibbar ist.

5. Verfahren nach einem der Ansprüche 1 bis 4, **dadurch gekennzeichnet, dass** die elektronische Einrichtung ein Einstellsystem für Fahrzeugsitze oder Gruppen von Fahrzeugsitzen bestehend aus ein oder mehreren Steuereinheiten und aus ein oder mehreren Verstelleinheiten ist, wobei die Bewegungsabläufe und Bewegungen der jeweils einzelnen Sitzkomponenten und dieser Sitzkomponenten zueinander und die Bewegungen dieser Komponenten oder Sitze innerhalb einer Umgebung oder Sitzgruppe durch ein dreidimensionales Bewegungsmodell in einem dreidimensionalen Koordinatensystem vollständig beschrieben werden.

6. Verfahren nach Anspruch 5, **dadurch gekennzeichnet, dass** das Bewegungsmodell vollständig an einem Personal Computer (PC) oder der CAD-Station eingegeben und konfiguriert werden kann.

7. Verfahren nach Anspruch 5 oder 6, **dadurch gekennzeichnet, dass** Grenzparameter für das Bewegungsmodel automatisch auf Basis definierter Umgebungsbeschreibungen generiert werden.

8. Verfahren nach 6 oder 7, **dadurch gekennzeichnet, dass** das Bewegungsmodell am PC simuliert werden kann.

9. Verfahren nach Anspruch 6, 7 oder 8, **dadurch gekennzeichnet, dass** das Bewegungsmodell vom PC in eine Steuerung übertragen werden kann.

10. Verfahren nach Anspruch 6, **dadurch gekennzeichnet, dass** das Bewegungsmodell in einer PC oder CAD-Stations-Software erstellt werden kann, oder in einem Software-Modul erstellt wird, das in eine PC- oder CAD-Stationsumgebung nachladbar ist (=Plug In).

11. Verfahren nach Anspruch 9, **dadurch gekennzeichnet, dass** die Steuerung eine Basissoftware umfasst, die je nach Kundenanwendung differieren kann und dass die Steuerung die primären Steuerungsfunktionen inklusive einem Verarbeitungsteil bereitstellt, wobei das Verarbeitungsteil eine mit dem Bewegungsmodell arbeitende Soft- und Hardware umfasst und eine flexible Einbettung des jeweiligen Bewegungsmodells erlaubt.

12. Verfahren nach Anspruch 9 oder 11, **dadurch gekennzeichnet, dass** die Steuerung, die modulare Konfiguration bezüglich der zu steuernden Komponenten ermöglicht.

13. Verfahren nach einem der Ansprüche 5 bis 12, **dadurch gekennzeichnet, dass** es die Handhabung des Bewegungsmodells mindestens eines Sitzes erlaubt.

14. Verfahren nach zumindest einem der Ansprüche 5 bis 13 , **dadurch gekennzeichnet, dass** es die Handhabung des Bewegungsmodels mindestens eines Sitzes in Abhängigkeit der Umgebungsbeschreibung erlaubt.

15. Verfahren nach Anspruch 7, 8, 9, 11, 12, 13 oder 14, **dadurch gekennzeichnet, dass** dessen Umgebungsbeschreibung während des Betriebs variieren kann.

16. Verfahren nach zumindest einem der Ansprüche 7 bis 9 oder 11 bis 15, **dadurch gekennzeichnet, dass** es eine Kontrolle auf Verletzung von Grenzparametern und Umgebungsbeschreibungen vornimmt.

17. Verfahren nach Anspruch 16, **dadurch gekennzeichnet, dass** es bei Verletzung von Grenzparametern und Umgebungsbeschreibungen erlaubt, definierbare Aktionen durchzuführen.

18. Fahrzeugsitz mit aneinander gekoppelten oder geführten Sitzkomponenten, die über mindestens eine Antriebseinrichtung in ihrer Lage und/oder Neigung einstellbar sind, mit einer elektronischen Einrichtung zur kollisionsfreien Bewegung und zur Einstellung des Sitzes in Bezug auf ein Koordinatensystem, **dadurch gekennzeichnet, dass** das Koordinatensystem ein kabinenorientiertes dreidimensionales Koordinatensystem ist und dass die elektronische Einrichtung die Antriebseinrichtung derart ansteuert, dass der zumindest eine Sitz in Bezug auf dieses Koordinatensystem kollisionsfrei in drei Dimensionen bewegbar und einstellbar ist.

19. Fahrzeugsitz nach Anspruch 18, **dadurch gekennzeichnet, dass** die elektronische Einrichtung die Bewegung des Sitzes und dessen Komponenten innerhalb einer räumlichen Begrenzung kontrolliert und dass die räumliche Begrenzung durch eine dreidimensionale ebene oder gekrümmte Hüllfläche gekennzeichnet ist, die sich in ihrer Lage und Form ändern kann.

20. Fahrzeugsitz nach zumindest einem der vorangehenden Ansprüche, **dadurch gekennzeichnet, dass** der Sitz um eine zu einem Kabinenboden rechtwinklige Drehachse verdreh- oder verschwenkbar ist.

21. Fahrzeugsitz nach zumindest einem der vorangehenden Ansprüche, **dadurch gekennzeichnet, dass** ein Informationsaustausch zwischen den Sitzen bzw. deren Steuerungssystemen zum Abgleich der veränderten Hüllfläche stattfindet.

22. Fahrzeugsitz nach zumindest einem der vorangehenden Ansprüche, **dadurch gekennzeichnet, dass** ein Sitzsteuerungssystem aus einer ControlUnit, Aktuatoren und geeigneter Weg- und Winkelsensorik besteht.

23. Fahrzeugsitz nach zumindest einem der vorangehenden Ansprüche, **dadurch gekennzeichnet, dass** die Betätigungseinrichtung elektrisch ansteuerbar und betreibbar ist.

## Claims

1. A method of moving at least one vehicle seat (1), arranged in a vehicle cabin (13), having seat components which are coupled to one another or guided on one another and which are adjustable in their position and/or inclination via at least one drive device (16), having an electronic device (17) for collision-free movement and for adjustment of the vehicle seat (1) in relation to a coordinate system (18), wherein additionally a right-angled coordinate system is also employed for the seat to seat evaluation or seat to cabin evaluation, and the spatial boundary can alter its position and form and an information exchange takes place between the seats or their control systems to balance the changed enveloping surface, **characterized in that** the coordinate system (18) is a cabin-oriented, three-dimensional coordinate system (18), **in that** the electronic device (17) controls the drive device (16) in such a manner that the at least one vehicle seat (1) is movable and adjustable in three dimensions in a collision-free manner with respect to this coordinate system (18), **in that** the electronic device (17) monitors the movement of the vehicle seat (1) and its components (2, 3, 4) within a spatial boundary **characterized by** a three-dimensional, curved enveloping surface, in that the spatial coordinate system is a spherical coordinate system, and in that the vehicle seat (1) is controllable about a rotational axis (15) at right angles to the cabin floor (14).

2. A method according to claim 1, **characterized in that** the motion of the seats is coupled in an automated manner in order to achieve a space-saving arrangement of the seats which is as economic as possible.

3. A method according to claim 1 or 2, **characterized in that** a seat control system is composed of a control unit, actuators and an appropriate path and angle sensor system.

4. A method according to at least one of the preceding claims, **characterized in that** an actuating device is electrically controllable and operable.

5. A method according to any one of claims 1 to 4, **characterized in that** the electronic device is an adjustment system for vehicle seats or groups of vehicle seats, consisting of one or a plurality of control units and of one or a plurality of adjustment units, wherein the motion sequences and movements of each of the individual seat components and of these seat components in relation to one another and the movements of these components or seats within their surroundings or seat group are completely described by a three-dimensional motion model in a three-dimensional coordinate system.

6. A method according to claim 5, **characterized in that** the motion model can be completely inputted and configured on a personal computer (PC) or the CAD station.

7. A method according to claim 5 or 6, **characterized in that** boundary parameters for the motion model are generated automatically based on defined surroundings descriptions.

8. A method according to claim 6 or 7, **characterized in that** the motion model can be simulated on the PC.

9. A method according to claim 6, 7 or 8, **characterized in that** the motion model can be transmitted from the PC into a control means.

10. A method according to claim 6, **characterized in that** the motion model can be created in software of a PC or CAD station or in a software module which can be loaded later into a PC environment or CAD station environment (=plug in).

11. A method according to claim 9, **characterized in that** the control means comprises systems software which can differ depending on customer application and **in that** the control means provides the primary control functions including a processing part, wherein the processing part comprises software and hardware working with the motion model and permits a flexible embedding of the respective motion model.

12. A method according to claim 9 or 11, **characterized in that** the control means makes possible the modular configuration with regard to the components to be controlled.

13. A method according to any one of claims 5 to 12, **characterized in that** it permits the use of the motion model of at least one seat.

14. A method according to at least one of claims 5 to 13, **characterized in that** it permits the use of the motion model of at least one seat dependent on the surroundings description.

15. A method according to claim 7, 8, 9, 11, 12, 13 or 14, **characterized in that** its surroundings description can vary during operation.

16. A method according to at least one of claims 7 to 9 or 11 to 15, **characterized in that** it carries out a check for violation of boundary parameters and surroundings descriptions.

17. A method according to claim 16, **characterized in that** it permits definable actions to be carried out in the event of a violation of boundary parameters and surroundings descriptions.

18. A vehicle seat having seat components which are coupled to one another or guided on one another and which are adjustable in their position and/or inclination via at least one drive device, having an electronic device for collision-free movement and for adjustment of the vehicle seat in relation to a coordinate system, **characterized in that** the coordinate system is a cabin-oriented, three-dimensional coordinate system and **in that** the electronic device controls the drive device in such a manner that the at least one seat is movable and adjustable in three dimensions in a collision-free manner with respect to this coordinate system.

19. A vehicle seat according to claim 18, **characterized in that** the electronic device monitors the movement of the seat and its components within a spatial boundary and **in that** the spatial boundary is **characterized by** a three-dimensional, plane or curved enveloping surface which can alter its position and form.

20. A vehicle seat according to at least one of the preceding claims, **characterized in that** the seat is rotatable or pivotable about a rotational axis at right angles to the cabin floor.

21. A vehicle seat according to at least one of the preceding claims, **characterized in that** an information exchange takes place between the seats or their control systems to balance the changed enveloping surface.

22. A vehicle seat according to at least one of the preceding claims, **characterized in that** a seat control system is composed of a control unit, actuators and an appropriate path and angle sensor system.

23. A vehicle seat according to at least one of the preceding claims, **characterized in that** the actuating device is electrically controllable and operable.

## Revendications

1. Procédé pour assurer le déplacement d'au moins un siège de véhicule (1) agencé dans une cabine de véhicule (13) et comprenant des composants de siège couplés les uns aux autres ou guidés les uns par rapport aux autres, qui sont réglables quant à leur position et/ou leur inclinaison par l'intermédiaire d'au moins un dispositif d'entraînement (16), avec un dispositif électronique (17) pour assurer un mouvement exempt de collisions et un réglage du siège de véhicule (1) par rapport à un système de coordonnées (18), procédé d'après lequel pour l'évaluation des interférences de siège à siège et pour l'évaluation des interférences des sièges relativement à la cabine, on utilise de manière complémentaire également un système de coordonnées rectangulaires, d'après lequel la délimitation spatiale peut varier quant à sa position et à sa forme, et d'après lequel il se produit un échange d'information entre les sièges ou leurs systèmes de commande pour l'ajustement d'adaptation de la surface-enveloppe modifiée, **caractérisé en ce que** le système de coordonnées (18) est un système de coordonnées à trois dimensions (18) orienté cabine, **en ce que** le dispositif électronique (17) pilote ou commande le dispositif d'entraînement (16) de manière à ce que ledit au moins un siège de véhicule (1) puisse être déplacé et réglé dans trois dimensions, sans collisions, par rapport à ce système de coordonnées (18), **en ce que** le dispositif électronique (17) assure le contrôle du mouvement du siège de véhicule (1) et de ses composants (2, 3, 4) à l'intérieur d'une délimitation spatiale, qui est définie par une surface-enveloppe tridimensionnelle courbe, **en ce que** le système de coordonnées spatiales est un système de coordonnées sphériques, et **en ce que** le siège de véhicule (1) peut être commandé en mouvement autour d'un axe de rotation (15) perpendiculaire par rapport à un sol de cabine (14).

2. Procédé selon la revendication 1, **caractérisé en ce que** les mouvements de déplacement des sièges sont couplés de manière automatisée en vue d'obtenir un agencement des sièges le plus économique possible et permettant un gain de place le plus important possible.

3. Procédé selon la revendication 1 ou la revendication 2, **caractérisé en ce qu'**un système de commande de siège est constitué par une unité de commande, des actionneurs et un ensemble approprié de capteurs de déplacement et de capteurs d'angle.

4. Procédé selon l'une au moins des revendications précédentes, **caractérisé en ce qu'**un dispositif d'actionnement peut être commandé et peut fonctionner par voie électrique.

5. Procédé selon l'une des revendications 1 à 4, **caractérisé en ce que** le dispositif électronique est un système de réglage pour sièges de véhicule ou groupes de sièges de véhicule, constitué d'une ou de plusieurs unités de commande et d'une ou de plusieurs unités de réglage, les séquences de mouvement et les mouvements respectifs des composants de siège individuels et des composants de sièges les uns relativement aux autres, et le mouvement de ces composants ou sièges à l'intérieur d'un environnement ou d'un groupe de sièges, sont décrits complètement par un modèle de mouvement tridimensionnel dans un système de coordonnées à trois dimensions.

6. Procédé selon la revendication 5, **caractérisé en ce que** le modèle de mouvement peut être introduit et configuré en totalité dans un ordinateur personnel (PC) ou un poste de CAO.

7. Procédé selon la revendication 5 ou la revendication 6, **caractérisé en ce que** des paramètres limites pour le modèle de mouvement sont générés automatiquement sur la base de descriptifs d'environnement définis.

8. Procédé selon la revendication 6 ou la revendication 7, **caractérisé en ce que** le modèle de mouvement peut être simulé sur le PC.

9. Procédé selon la revendication 6, 7 ou la revendication 8, **caractérisé en ce que** le modèle de mouvement peut être transféré du PC à une commande.

10. Procédé selon la revendication 6, **caractérisé en ce que** le modèle de mouvement peut être établi dans un logiciel de PC ou de poste de CAO, ou dans un module de logiciel qui peut être chargé ultérieurement dans un environnement de PC ou de poste de CAO (= plug in).

11. Procédé selon la revendication 9, **caractérisé en ce que** la commande comprend un logiciel de base, qui peut différer en fonction de l'utilisation client, et **en ce que** la commande fournit les fonctions de commande primaires y compris une partie de traitement, la partie de traitement comprenant un logiciel et un hardware travaillant avec le modèle de mouvement et permettant une implantation flexible du modèle de mouvement respectivement considéré.

12. Procédé selon la revendication 9 ou la revendication 11, **caractérisé en ce que** la commande permet la configuration modulaire concernant les composants à commander.

13. Procédé selon l'une des revendications 5 à 12, **caractérisé en ce qu'**il permet de gérer le fonctionnement du modèle de mouvement d'au moins un siège.

14. Procédé selon l'une des revendications 5 à 13, **caractérisé en ce qu'**il permet de gérer le fonctionnement du modèle de mouvement d'au moins un siège, en fonction du descriptif de l'environnement.

15. Procédé selon la revendication 7, 8, 9, 11, 12, 13 ou la revendication 14, **caractérisé en ce que** son descriptif d'environnement peut varier pendant le fonctionnement.

16. Procédé selon l'une au moins des revendications 7 à 9 ou 11 à 15, **caractérisé en ce qu'**il effectue un contrôle quant à savoir si des paramètres limites ou des descriptifs d'environnement ont été enfreints.

17. Procédé selon la revendication 16, **caractérisé en ce qu'**il autorise ou permet, lorsque des paramètres limites ou des descriptifs d'environnement en été enfreints, d'effectuer des actions définies.

18. Siège de véhicule comprenant des composants de siège couplés les uns aux autres ou guidés les uns par rapport aux autres, qui sont réglables quant à leur position et/ou leur inclinaison par l'intermédiaire d'au moins un dispositif d'entraînement, avec un dispositif électronique pour assurer un mouvement exempt de collisions et un réglage du siège de véhicule par rapport à un système de coordonnées, **caractérisé en ce que** le système de coordonnées est un système de coordonnées à trois dimensions orienté cabine, **en ce que** le dispositif électronique pilote ou commande le dispositif d'entraînement de manière à ce que ledit au moins un siège de véhicule puisse être déplacé et réglé dans trois dimensions, sans collisions, par rapport à ce système de coordonnées.

19. Siège de véhicule selon la revendication 18, **caractérisé en ce que** le dispositif électronique assure le contrôle du mouvement du siège de véhicule et de ses composants à l'intérieur d'une délimitation spatiale, et **en ce que** la délimitation spatiale est définie par une surface-enveloppe tridimensionnelle plane ou courbe, qui peut varier quant à sa position et à sa forme.

20. Siège de véhicule selon l'une au moins des revendications précédentes, **caractérisé en ce que** le siège peut tourner ou pivoter autour d'un axe de rotation perpendiculaire à un sol de la cabine.

21. Siège de véhicule selon l'une au moins des revendications précédentes, **caractérisé en ce qu'**un échange d'information a lieu entre les sièges ou leurs systèmes. de commande pour l'ajustement d'adaptation de la surface-enveloppe modifiée.

22. Siège de véhicule selon l'une au moins des revendications précédentes, **caractérisé en ce qu'**un système de commande de siège est constitué par une unité de commande, des actionneurs et un ensemble approprié de capteurs de déplacement et de capteurs d'angle.

23. Siège de véhicule selon l'une au moins des revendications précédentes, **caractérisé en ce que** le dispositif d'actionnement peut être commandé et peut fonctionner par voie électrique.
